# EUROPEAN PATENT SPECIFICATION

(11) **EP 4 158 107 B1**
(45) Date of publication and mention of the grant of the patent: **09.12.2026**
(21) Application number: 21730256.1
(22) Date of filing: 27.05.2021
(51) Int. Cl.: E01F 9/681, E01F 9/635

(54) **SAFETY MAST**
SICHERHEITSMAST
MÂT DE SÉCURITÉ

(30) Priority: 28.05.2020 FI 20205552
(43) Date of publication of application: 05.04.2023
(73) Proprietor: Normiopaste Oy, 33310 Tampere (FI)
(72) Inventor: SAARNI, Tommi, 33310 Tampere (FI)
(74) Representative: Boco IP Oy Ab
(86) International application number: PCT/FI2021/050387
(87) International publication number: WO 2021/240070

(56) References cited:
- WO-A1-2009/113866
- GB-A- 2 507 377
- SE-A1- 0 900 052
- US-A- 3 521 413
- US-A- 4 674 907
- US-A1- 2009 272 053
- US-A1- 2014 340 244

## Description

### TECHNICAL FIELD

The invention is concerned with a safety mast comprising a foundation and a pole.

### BACKGROUND

A mast is or has a pole that rises vertically and can for example be used as a support structure for signal heads and information signs, like for example road signs, traffic signs and traffic signal lighting. The meaning and position of these various indications is to guide and control traffic. Such traffic signal masts and poles can be seen up and down controlling the traffic especially in busy highways.

Accidents, however, happens with collisions leading to a crash against such masts and poles. Therefore, durable pole and pole base solutions for road safety have been developed for collision safety.

Collision safe poles are commonly used in information signs and the like when the amount of traffic exceeds 1500 drives per day or when the speed level is at least 60 km/h. Alternatively, the structures are placed at a sufficient distance.

In such collision safe solutions, the safety is usually based on the construction of the pole or mast. When a vehicle hits the pole, the vehicle might stop slowly and safely. Depending on construction, the pole can e.g. give way to a vehicle in a collision situation, allowing the vehicle to continue on its path, or bend in front of the vehicle, stopping the car safely.

Such a bending solution is disclosed in e.g. Fl patent 97559.

EP patent 2735652 relates to a traffic-safe and collision energy absorbing pole comprising a collision energy absorbing arrangement for absorbing an amount of collision energy upon a collision impact of a road vehicle with the pole.

There are also slip base (frangible) poles addressing the universal problem of high-speed road accidents involving roadside collisions with light poles. Poles designed and evaluated in this way need to be certified by the relevant authorities. Slip base poles are base plate mounted, either on an in-ground section or concrete foundation. The base is a concrete element inserted in the ground, a steel pedestal, or a part of a vertical mast or pole, which ensures that the entirety of the poles and the sign keep standing. The poles are hot dip galvanized and can be powder coated or painted. The slip base light pole consists of a normal pole stem, catering for mounting heights up to approximately 15m.

The base involves two plates with the facility of freely coming apart if a crash occurs. They are usually clamped or bolted together with three equally spaced bolts. The plates and bolts are released during an impact, allowing the pole stem to break away from its foundation with minimal impact on the vehicle.

The slip base or slip flange is a fastening member between the base and the pole, which enables the pole to slide off from the base at a collision, thereby ensuring the collision safety. Thus, the design of slip base poles enables the pole to slip at the base and fall should a collision occur. This ideally suits freeways and other high-speed roadways where the likelihood of a secondary accident, resulting from the falling pole, is accepted as being unlikely. The standard height and outreach lengths vary according to relevant authority specifications.

Because slip base poles are intended to dislodge and fall during an accident, their use is restricted to those areas where the likelihood of a resultant secondary incident is reasonably low and passing vehicles or pedestrians are not likely to be implicated. Furthermore, slip base solutions work in a single colliding direction only.

Even if the basic solution for a collision safe information board is a steel pole with a slip flange and an ordinary board, the solution, however, does not work as well e.g. immediately behind the bottom of a ditch as a breaking construction of the above mentioned reasons. A breaking construction might have two breaking or bending poles and a safe board.

There are also frangible mast solutions that are lattice structures. When a vehicle crashes into such a mast, one of the corner elements is pressed inward and the mast bends. In addition, the mast loosens all the way down from the footplate. The mast tips over the car and lands behind it.

The mast or pole bends or breaks in a collision depending on speed. The boards bend along with the bending mast. There are usually two masts per board. In a slope, such a lattice construction works better than a slip flange.

There are, however, also lattice structures with slip base poles. In these solutions, the slip base gets off and the board falls behind the vehicle. A concrete foundation is used that has a fastening plate for connecting the slip base. Only one mast is used.

A further collision safe solution is a breaking pipe, which breaks at collisions and is mounted on a concrete foundation above the ground surface. Two poles are often needed in order to get a connection that is rigid enough.

Collision safe constructions are thus usually based on one of a rigid pipe with a slip base, a pipe having a thin wall and which first bends and then breaks at its base, a lattice construction having reinforcements above so that a colliding car would cause the slip base to go off in addition to bending the lattice, a lattice that first bends and then breaks at its base. Generally, they are pipe poles, profile poles, lattice constructions or composite poles or the like and the collision safety is realized by a bending pole or providing a rigid pole with a slip plate or slip base.

The collision safety of information boards is for the time being estimated according to the standard EN 12767 (Passive safety of support structures for road equipment - Requirements and test methods). The practice will change when a the new standard EN 12899-1 (Fixed, vertical road traffic signs) is taken in use.

US patent 4,674,907 is mentioned as prior art, which discloses a frangible assembly for breakaway pole basis having a pair of spaced an parallel plate with a plurality of struts extending therebetween and being situated between a pole base and a supporting base.

SE patent application 0900052 A1 discloses a ground element for supporting an object, like a mast, and having different adjustment possibilities.

WO publication 2009/113866 A1 relates to a yielding mast, where the mast in a collision with a moving body, is configured to yield as much as possible.

UK patent application GB2507377 discloses a support assembly that promotes failure when impacted.

US patent application 2009/027053A1 discloses a ground anchor assembly including two threaded studs.

US patent 3,521,413 discloses a pole base support for carrying objects adjacent vehicular traffic bearing surfaces which break away when struck by a moving vehicle.

### SUMMARY

The safety mast of the invention comprises a foundation and a pole connected thereto via a base plate. The connection consists of at least one breakaway bolt mounted between the foundation and the base plate. Said one or more breakaway bolts are mounted through holes in the base plate, whereby the shorter diameter of the holes is pointing to the center of the base plate. The holes are ellipse-formed enabling the base plate to be twisted for alignment.

The preferable embodiments have the characteristics of the sub claims.

The cross-section of the pole can be rectangular, square-formed, circular or oval, or the pole can be a lattice structure. The base plate is usually welded to the pole.

Said one or more breakaway bolts are usually mounted through holes in each one of four corners of a rectangular or square-formed base plate. The holes can also be evenly distributed and positioned with desired intervals, especially over the periphery of a circular or oval base plate. The holes are ellipse-formed for enabling the base plate to be twisted for alignment. They are directed with their semi-minor axis (i.e. "shorter diameter") pointing to the center of the base plate. The width and height parameters of the ellipse-formed holes being called the semi-major and semi-minor axes.

The dimensions and/or type of the breakaway bolts can be similar or differ from each other. Each breakaway bolt is anyway a two-part bolt consisting of a female part and a male part inserted in the female part, which female part is casted into the foundation. There is a narrowed portion in the form of a groove in the male part intended to break upon a collision or other impact. The diameter of the male part at the groove is about 40 - 85%, preferably 60 - 75% of the other diameter of the male part.

The breakaway bolts are usually selected from socket anchors or other anchor bolts, such as L-shaped anchor bolts. L- Shaped anchor bolts are useful for being embedded in concrete foundations and used to support structural steel columns, light poles, highway signs, heavy equipment, and many other applications. The hook portion of the anchor bolt serves to create resistance so that the bolt does not pull out of the concrete foundation when force is applied.

With respect to terminology, as used in this application, the term **mast** is used to cover both the foundation and the tall, slim vertical construction part used to support the communications equipment, such as the traffic sign, whereas the **pole** is used for the vertical construction part alone even if these terms might be used interchangeably elsewhere.

A bolt, generally is a form of a threaded fastener with an external male thread. Bolts are very closely related to screws. When making a mechanical application generally, the parts of the construction is usually selected to make the construction resistant to damage. A breakaway bolt, also called, a shear bolt or a snap-off bolt, however, is made so that it breaks or shatters rather than bends when a given force is applied. In the role of a mechanical safeguard, a breakaway bolt, is designed as a mechanical sacrificial part to shear in the case of a mechanical overload, preventing other, more expensive parts from being damaged. They are also known as snap-off bolts, break-away bolts, break off bolts and break-away head bolts.

Breakaway bolts, thus, have an intentionally weak part, such as a narrowed portion, a sacrificial part, or a flaw build into them. Conventionally, in prior art, they are designed to snap under a level of pressure to prevent other parts from breaking. Breakaway bolts, however, are designed specifically to fail at a relatively low level of force. By failing and preventing the transmission of force or torque due to the applied pressure, they can prevent damage to other more expensive parts of the equipment. This may happen, for example, when something gets jammed in the mechanism. They can for example be used to protect snowblowers.

The breakaway bolt itself is placed through two parts, locking them in place as long as the bolt is intact. For each application, it is individually constructed in view of material and dimensions to allow the bolt to break only when the predetermined threshold force or shock caused by the pressure is reached.

In the invention, however, the breakaway bolts used are designed and selected to snap off under an impact caused by a collision rather than pressure.

The safety mast of the invention can be used in connection with different traffic masts and poles. Traffic signs are information signs of standard size, which can be informing, warning or forbidding. They can also be sign posts, orientation boards and other guiding signs.

Thus, in contrary to prior art, the information signs or the like in which context the invention is used, the whole construction has to stand weather and wind loads, even hard storms, and also the combined impact and load caused by snow thrown on them by snow ploughs. This requirement, in addition to the impact caused by collisions by cars etc. on the lower part of the information sign, is therefore a further challenge.

Shear strength is defined as the maximum load that can be supported prior to fracture, when applied at a right angle to the fastener's axis. A load occurring in one transverse plane is known as single shear. Double shear is a load applied in two planes where the fastener could be cut into three pieces. To determine the shear strength, the cross-sectional area of the shear plane is important. In the invention, the location of the shear plane of interest occurs in the male part of the bolt in a narrower area with lower bolt shear strength.

Loads can be applied to bolted joints in a number of different ways, each of which produces unique effects on the joint. These effects result from the way the joint is loaded, as well as how the joint responds to the load. Some of the various load types include tensile, shear and bending. The type of bolted joint derives its name from the external load applied to the joint.

The invention aids in preventing personal injuries upon collisions by providing and improved collision safety for the construction of the mast.

In the following, the invention will be described by referring to some preferable embodiments by means of figures. The invention is not restricted to these examples.

### FIGURES

Figure 1 is a general view of the safety mast of the invention.
Figure 2 is an enlarged view of the part of figure 1 illustrating the connection between the bottom plate and the base.
Figure 3 is a detailed example of a breakaway bolt usable in the invention
Figure 4 is a detailed view of a male part of an example breakaway bolt usable in the invention

### DETAILED DESCRIPTION

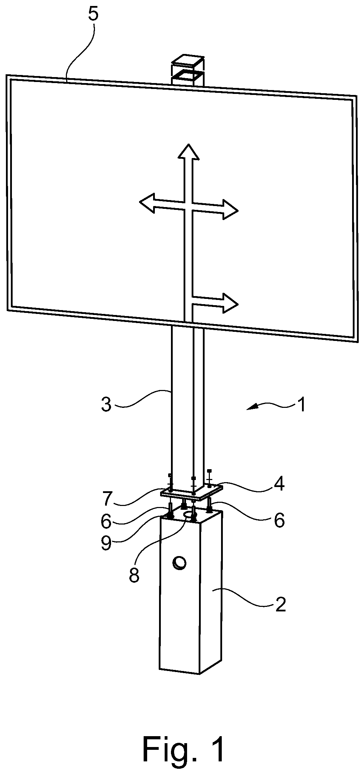

Figure 1 is a general view of the safety mast of the invention. It comprises a foundation 2 and a pole 3 connected to the foundation 2 via a base plate 4. In figure 1, the base plate 4 is of illustrative reasons shown separate from the foundation 2.

A sign 5 is fastened on the pole 3 with fasteners (not shown) through holes in the edges of the sign 5. The fasteners are usually hot-dip galvanized and have to stand the same loads as the other construction parts. The signs are usually of standard size and can consist of information signs, like warning signs, prohibition signs, restriction signs, guiding signs, signposts and the like.

There is a reflective film on the surface of the plate of sign 5, on which the information content of the sign is shown, usually arrows to named cities. The sign 5, thus, includes the film and the plate of the sign 5.

The pole 3 is the vertical construction to which the sign 5 is fastened and there can be one or more of them. The pole 3 can e.g. be a lattice structure or e.g. have a circular or square-formed cross-section and be made of e.g. steel or aluminum.

The foundation 2 is a concrete element, a steel construction, or a part of an erection pole or column. The foundation 2 ensures that the entirety of the pole 3 and sign 5 is maintained in an upright position. The pole 3, e.g. a steel pole, can be welded to the base plate 4, which is fastened by the breakaway bolts 6 to the foundation 2. The pole 3 is fastened so that it does not rotate.

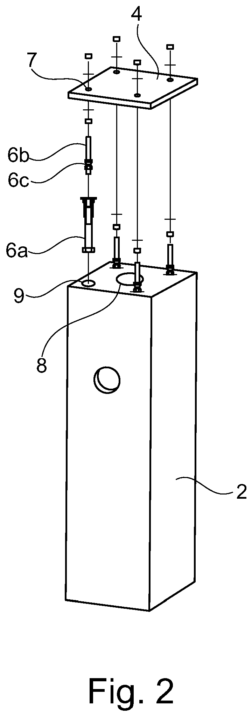

The pole 3 is thus connected to the foundation 2 via a base plate 4. The connection between the pole 3 and the foundation 2 is performed in the invention by breakaway bolts 6 mounted between the foundation 2 and the base plate 4. The breakaway bolts 6 are mounted through holes 7 (better seen in figure 2) in each one of four corners of the base plate 4 and inserted in holes 9 (better seen in figure 2) of the foundation 2. The base plate 4 is welded to the pole 3. Reference number 8 is a hole for electric cables.

Figure 2 is an enlarged view of the part of figure 1 illustrating the connection between the base plate 4 and the foundation 2. As in figure 1, the base plate 4 is of illustrative reasons shown separate from the foundation 2.

The breakaway bolt 6 is a two-part bolt consisting of a female part 6a and a male part 6b inserted in the female part 6a.

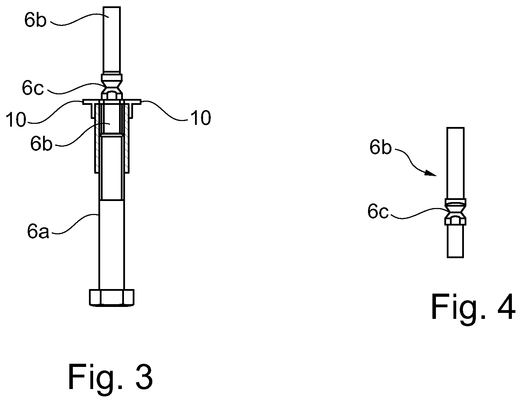

There is a narrowed portion (better seen in figure 4) in the form of a groove 6c in the male part 6b intended to break upon a collision or other impact. Preferably, the diameter of the male part 6b at the groove 6c is about 40 - 85%, preferably 60 - 75% of the other diameter of the male part 6b at other parts of the male part 6b.

The holes 7 in the base plate 4 are ellipse-formed enabling the base plate 4 to be twisted for alignment.

Figure 3 is a detailed example of a breakaway bolt 6 usable in the invention shown in cross-section. Figure 3 shows the male part 6b partly inserted into the female part 6a. The groove 6c of the male part 6b is outside the female part 6a at connection. Flanges 10 are used for a secure connection.

Figure 4 shows the male part 6b alone.

## Claims

1. Safety mast (1) comprising a foundation (2) and a pole (3) connected thereto via a base plate (4), the connection consisting of at least one breakaway bolt (6) mounted between the foundation (2) and the base plate (4), wherein said one or more breakaway bolts (6) are mounted through holes (7) in the base plate (4), **characterized in that** the holes (7) are ellipse-formed enabling the base plate (4) to be twisted for alignment, whereby the shorter diameter of the holes (7) is pointing to the center of the base plate (4).

2. Safety mast (1) of claim 1, wherein said one or more breakaway bolts (6) are mounted through holes (7) in each one of four corners of a rectangular or square-formed base plate (4).

3. Safety mast (1) of claim 1, wherein said one or more breakaway bolts (6) are mounted through holes (7) positioned with desired intervals close to the periphery of a circular, oval, rectangular or square-formed base plate (4).

4. Safety mast (1) of any of claims 1 - 3, wherein the dimensions and/or type of the breakaway bolts (6) are similar or differ from each other.

5. Safety mast (1) of any of claims 1 - 4, wherein the cross-section of the pole (3) is rectangular, square-formed, circular or oval, or it is a lattice structure.

6. Safety mast (1) of any of claims 1 - 5, wherein the base plate (4) is welded to the pole (3).

7. Safety mast (1) of any of claims 1 - 6, wherein each breakaway bolt (6) is a two-part bolt consisting of a female part (6a) and a male part (6b) inserted in the female part (6a), whereby there is a narrowed portion in the form of a groove (6c) in the male part (6b) intended to break upon a collision or other impact.

8. Safety mast (1) of claim 7, wherein the diameter of the male part (6b) at the groove (6c) is about 40 - 85%, preferably 60 - 75% of the other diameter of the male part (6b).

9. Safety mast (1) of any of claims 1 - 8, wherein the breakaway bolts (6) are selected from sockets anchors or other anchor bolts, such as L-shaped anchor bolts.

## Patentansprüche

1. Sicherheitsmast (1) umfassend ein Fundament (2) und einen mit diesem über eine Grundplatte (4) verbundenen Pfosten (3), wobei die Verbindung aus mindestens einer zwischen dem Fundament (2) und der Grundplatte (4) montierten Abreißschraube (6) besteht, wobei die eine oder mehreren Abreißschrauben (6) durch Bohrungen (7) in der Grundplatte (4) montiert sind, **gekennzeichnet dadurch, dass** die Bohrungen (7) als Ellipse ausgebildet sind, so dass die Grundplatte (4) zur Ausrichtung verdreht werden kann, wobei der kürzere Durchmesser der Bohrungen (7) zur Mitte der Grundplatte (4) weist.

2. Sicherheitsmast (1) nach Anspruch 1, wobei die eine oder mehreren Abreißschrauben (6) durch Bohrungen (7) in jeder der vier Ecken einer rechteckigen oder quadratischen Grundplatte (4) montiert sind.

3. Sicherheitsmast (1) nach Anspruch 1, wobei die eine oder mehreren Abreißschrauben (6) durch Bohrungen (7) montiert sind, die in gewünschten Intervallen nah am Rand einer kreisförmigen, ovalen, rechteckigen oder quadratischen Grundplatte (4) angeordnet sind.

4. Sicherheitsmast (1) nach einem der Ansprüche 1 bis 3, wobei die Abmessungen und/oder die Art der Abreißschrauben (6) ähnlich sind oder voneinander abweichen.

5. Sicherheitsmast (1) nach einem der Ansprüche 1 bis 4, wobei der Querschnitt des Pfostens (3) rechteckig, quadratisch, kreisförmig oder oval ist, oder es sich um eine Gitterstruktur handelt.

6. Sicherheitsmast (1) nach einem der Ansprüche 1 bis 5, wobei die Grundplatte (4) am Pfosten (3) angeschweißt ist.

7. Sicherheitsmast (1) nach einem der Ansprüche 1 bis 6, wobei jede Abreißschraube (6) eine zweiteilige Schraube ist, die aus einem Hülsenteil (6a) und einem in das Hülsenteil (6a) eingeführten Steckteil (6b) besteht, wobei es im Steckteil (6b) einen verengten Abschnitt in Form einer Einschnürung (6c) gibt, der bei einer Kollision oder einem anderen Aufprall brechen soll.

8. Sicherheitsmast (1) nach Anspruch 7, wobei der Durchmesser des Steckteils (6b) an der Einschnürung (6c) etwa 40-85 %, bevorzugt 60-75 %, des übrigen Durchmessers des Steckteils (6b) beträgt.

9. Sicherheitsmast (1) nach einem der Ansprüche 1 bis 8, wobei die Abreißschrauben (6) ausgewählt sind aus Hülsenankern oder anderen Ankerschrauben, wie L-förmigen Ankerschrauben.

## Revendications

1. Mât de sécurité (1) comprenant une fondation (2) et un poteau (3) relié à celle-ci via une platine de base (4), la liaison étant constituée d'au moins un boulon à rupture (6) monté entre la fondation (2) et la platine de base (4), dans lequel lesdits un ou plusieurs boulons à rupture (6) sont montés à travers des trous (7) dans la platine de base (4), **caractérisé en ce que** les trous (7) sont réalisés de forme elliptique, permettant de faire pivoter la platine de base (4) pour l'alignement, le petit diamètre des trous (7) étant orienté vers le centre de la platine de base (4).

2. Mât de sécurité (1) selon la revendication 1, dans lequel lesdits un ou plusieurs boulons à rupture (6) sont montés à travers des trous (7) dans chacun des quatre coins d'une platine de base (4) rectangulaire ou carrée.

3. Mât de sécurité (1) selon la revendication 1, dans lequel lesdits un ou plusieurs boulons à rupture (6) sont montés à travers des trous (7) positionnés dans des intervalles désirés à proximité de la périphérie d'une platine de base (4) circulaire, ovoïde, rectangulaire ou carrée.

4. Mât de sécurité (1) selon l'une des revendications 1 à 3, dans lequel les dimensions et/ou le type des boulons à rupture (6) sont similaires ou différents entre eux.

5. Mât de sécurité (1) selon l'une des revendications 1 à 4, dans lequel la section transversale du poteau (3) est rectangulaire, carrée, circulaire ou ovoïde ou elle est une structure en treillis.

6. Mât de sécurité (1) selon l'une des revendications 1 à 5, dans lequel la platine de base (4) est soudée au poteau (3).

7. Mât de sécurité (1) selon l'une des revendications 1 à 6, dans lequel chaque boulon à rupture (6) est un boulon en deux parties constitué d'une partie femelle (6a) et d'une partie mâle (6b) insérée dans la partie femelle (6a), la partie mâle (6b) comportant une zone rétrécie en forme de gorge (6c) destinée à se rompre lors d'une collision ou d'un autre impact.

8. Mât de sécurité (1) selon la revendication 7, dans lequel le diamètre de la partie mâle (6b) au niveau de la gorge (6c) est égal à environ 40-85 %, de préférence 60-75 % de l'autre diamètre de la partie mâle (6b).

9. Mât de sécurité (1) selon l'une des revendications 1 à 8, dans lequel les boulons à rupture (6) sont choisis parmi les ancrages à douille ou autres boulons d'ancrage tels que boulons d'ancrage en L.
